# EUROPEAN PATENT SPECIFICATION

(11) **EP 2 218 634 B1**
(45) Date of publication and mention of the grant of the patent: **25.01.2012**
(21) Application number: 09251183.1
(22) Date of filing: 24.04.2009
(51) Int. Cl.: B62M 6/55, B62M 11/14, B62M 6/45

(54) **Bicycle transmission system**
Fahrrad-Übertragungssystem
Système de transmission de bicyclette

(30) Priority: 12.02.2009 GB 0902356
(43) Date of publication of application: 18.08.2010
(73) Proprietor: Nexxtdrive Limited, London WC2N 5HR (GB)
(72) Inventor: Moeller, Frank H., Milford, Stafford ST 17 0UN (GB)
(74) Representative: Jennings, Nigel Robin

(56) References cited:
- EP-A2- 0 937 600
- WO-A1-00/43259
- WO-A1-2006/035215
- JP-A- 10 203 466
- US-A- 5 167 591

## Description

The present invention relates to bicycle transmission systems of variable transmission ratio. Bicycle transmission systems conventionally include a sprocket wheel connected to rotate with the bicycle pedals, a further sprocket wheel connected to rotate with the rear wheel and a continuous chain passing around both sprocket wheels for transmitting the propulsive force exerted on the pedals to the rear wheel.

Many bicycle transmission systems of variable transmission ratio are known and the most widely used are so-called hub gears and derailleur gears. Hub gears are essentially a gearset accommodated within the hub of the rear wheel with an input connected to the rear sprocket wheel and an output connected to the rear wheel. Such transmission systems are selectively switchable to provide three or more different transmission ratios. Derailleur gears include two or more sprocket wheels of different size connected to the rear wheel and/or to the pedal cranks and a mechanism arranged to selectively move the bicycle chain laterally from one sprocket wheel to another. The known transmission systems do not provide an infinitely variable transmission ratio but a finite number of fixed transmission ratios.

A bicycle transmission of infinitely variable transmission ratio is available from a company by the name of Fallbrook Technologies under the name of NuVinci. This includes input and output discs in rolling contact with large balls which may be tilted, thereby altering the effective radius of the points of contact between the balls and the discs and thus also altering the transmission ratio between the two discs. This transmission is complex and bulky and also does not inherently permit the additional introduction of power produced by a motor and the combination of that power with the power generated by the user.

Motor vehicle transmission systems are also known of the type comprising an epicyclic gearset, of which two shafts constitute the input and output and are thus connected, in use, to the crankshaft of the vehicle engine and to the wheels of the vehicle, respectively, and two shafts are connected to the rotors of respective electrical machines constituting motor/generators. The stator connections of the two electrical machines are connected together via a controller arranged to control the electrical power transmitted between them and to and from an electric storage medium, such as a battery. In use, one of the electrical machines acts as a generator and the power it generates is transmitted to the other machine, which operates as a motor. Power is thus transmitted through such transmission systems both mechanically and electrically and variation in the proportion of the power that is transmitted electrically will result in progressive variation in the transmission ratio. Such transmission systems, which are sometimes referred to as power split transmissions, are therefore of infinitely variable transmission ratio.

However, whilst power split transmissions have been widely used on motor vehicles, they have not been used on bicycles and it is believed that there are two primary reasons for this. Thus firstly it was believed that such transmission systems would be too bulky and heavy for use on a bicycle. Secondly, it was believed that the electric machines would be largely ineffective because such machines are inherently not capable of generating/absorbing any significant torque at the lower speeds which are inherent in a bicycle transmission.

A bicycle transmission system according to the preamble of claim 1 is disclosed in EP 0937600A.

It is the object of the invention to provide a bicycle transmission system which is of infinitely variable transmission ratio and which will therefore permit the transmission ratio at any one time to be at or much closer to the ratio which is the optimum in the light of the road conditions and strength and fitness of the user than is possible with a transmission system providing only a relatively small number of discrete transmission ratio. It is a further object of the invention to provide a bicycle transmission system which readily enables mechanical power to be generated by a motor and directed into the driveline to permit the bicycle to be at least partially motor driven at selected times, e.g. when the user is tired or when climbing a hill, and enables the power produced by the motor to be combined in a simple manner with the power applied to the bicycle pedals by the user.

According to the present invention, a bicycle transmission system according to claim 1 is proposed.

Thus the transmission system in accordance with the present invention is of split power type but it is found surprisingly that it is not only extremely effective but also that it may be small enough and light enough to be readily accommodated on a bicycle. The small size of the transmission system is made possible by the fact that the Rₒ ratio of the gearset is between -2 and -4 and it is found in practice that Rₒ values greater than -4 result in the gearset being unacceptably large. It has been appreciated also that the problem of the motor/generators being essentially ineffective at the low speeds associated with bicycle transmission systems may be overcome by the use of step-up gearing so that whilst the elements of the epicyclic gearset rotate at low speed, the motor/generators rotate very much faster, that is to say at speeds at which they can operate effectively. The transmission system in accordance with the invention thus inherently includes two motor/generators and this means that it is therefore very simple for a bicycle to which the transmission system is fitted to be motor-assisted. Thus the two motor/generators may be connected via the controller to an electric storage medium, such as a battery which may be arranged to selectively direct electrical power from the battery to one or even both motor/generators to cause them to operate as motors and thus to provide some or even all of the propulsive power needed to drive the bicycle. It is therefore proposed that the controller is programmed selectively to direct electrical power from an electric battery to at least one of the motor/generators to cause it to operate as a motor. The presence of the motor/generators and an electric battery also opens up the possibility to use regenerative braking, that is to say of braking the bicycle, at least in part, electrically rather than mechanically and using the kinetic energy of the bicycle and rider which must be dissipated to generate electrical power, which is then used to recharge the battery. It is therefore preferred that the controller is also programmed selectively to direct electrical power from that motor/generator which is operating as a generator to an electric battery to recharge it.

In normal operation of the bicycle, one of the motor/generators will normally operate as a generator and the power which it produces is directed by the controller to the other motor/generator, which operates as a motor. The amount of electrical power transferred between the two motor/generators will be controlled by the user, e.g. by means of an infinitely variable gear lever on the bicycle handlebars, and this will result in the transmission ratio changing progressively to the instantaneously desired value. Alternatively or additionally, the change in transmission ratio may be effected automatically by the controller, e.g. in dependence on the effort exerted by the user, which may be sensed by a torque sensor associated with the bicycle crankshaft. The transmission ratio is therefore infinitely variable and may be set at whatever value the user requires and is not limited to one of the relatively small number of discrete values available with the known bicycle transmission systems.

The input is connected to the planet carrier and the sun gear is rotatable with respect to the input and is connected to the first motor/generator via step-up gearing with a step-up ratio of at least 5 and the annulus gear is connected to the second motor/generator via step-up gearing with a step-up ratio of at least 8. It is preferred further that gear teeth are integrally formed on the input, that is to say on the bicycle crankshaft, which teeth are in mesh with gear teeth on the planet carrier.

It is preferred that the rotors of the first and second motor/generator are connected to a respective pinion gear in mesh with gear teeth on the sun gear and annulus gear, respectively.

The present invention also embraces a transmission system of the type referred to above in situ on a bicycle, the crankshaft being connected to the pedals of the bicycle to be rotated thereby and the output being connected to a bicycle sprocket wheel. In practice, a chain will be in mesh with that sprocket wheel and with a further sprocket wheel connected to rotate with the rear wheel of the bicycle.

Further features and details of the invention will be apparent from the following description of one specific embodiment which is given by way of example with reference to the single accompanying drawing, which is an axial sectional view of a bicycle transmission in accordance with the invention.

The transmission system includes an input shaft 2, which constitutes the crankshaft of a bicycle. This crankshaft is connected, in use, to the pedals of the bicycle but only a portion 4 of the shafts of the pedals is shown. The transmission is enclosed within an outer housing 6 and the crankshaft is mounted to rotate with respect to that housing by means of two bearings 8. Formed integrally with the crankshaft 2 is a circumferential array of gear teeth 10, which are in mesh with complementary gear teeth formed on the planet carrier of an epicyclic gearset. The planet carrier 12 carries a number of planet shafts 14, each of which rotatably carries a respective rotatable planet gear 16. The planet gears 16 are in mesh with teeth formed on a sun gear 18, which is rotatable with respect to the crankshaft 2, and with teeth formed on an annulus gear 20.

The transmission system also includes a first motor/generator 22 and a second motor/generator 24. The rotors of these two motor/generators carry respective pinion gears 26, 28. These two pinion gears are in mesh with teeth formed on the sun gear 18 and the annulus gear 20, respectively. The two pinion gears are of relatively small diameter compared to the sun gear and annulus gear and the connection of the pinions therefore constitutes step-up gearing. The step-up ratio between the sun gear 18 and the motor/generator 22 is at least 5 and is in this case 8. The step-up ratio between the annulus gear and the pinion 28 is at least 10 and is in this case 12. The electrical stator connections of the two motor/generators are connected together via a controller 30, which is arranged to control the electrical power transferred between the two motor/generators, in this case in response to the position of a movable gear lever or transmission ratio lever mounted on the handlebars of the bicycle. The controller is also connected to a rechargeable electric battery 31.

The annulus gear 20 is connected to rotate with an annular output member 32, which is connected to rotate with a bicycle sprocket wheel 34 of conventional type. In use, a bicycle chain (not shown) will pass over and be in mesh with both the sprocket wheel 34 and also a further sprocket wheel (not shown) connected to rotate with the rear wheel of the bicycle.

In use, the user rotates the pedals of the bicycle in the usual manner and this rotational movement is transmitted to the epicyclic gearset and the sun gear 18 and annulus gear 20 thus rotate also and the sprocket wheel 34 rotates with the annulus gear 20. Although the sun gear 18 and annulus gear 20 necessarily rotate relatively slowly, the step-up gearing between them and the two motor/generators 22, 24, means that these two electrical machines rotate relatively rapidly. One of them normally operates as a generator and the power which it generates is directed by the controller 30 to the other machine, which acts as a motor. The speed of the annulus gear 20 and thus the transmission ratio of the transmission may be varied at will by the user by controlling the controller 30 to transmit a desired amount of electrical power from one machine to the other. If the user should require motor assistance, e.g. when climbing a hill, he operates the control system to cause electrical power to be drawn from the battery 31 and directed to that electrical machine which is operating as a motor, thereby adding mechanical power to the transmission system resulting either in the bicycle moving more rapidly or in the amount of effort that must be exerted by the user to maintain a constant speed being reduced. If the user should operate the bicycle brake, this is communicated to the controller which then directs electrical power from that electrical machine which is operating as a generator to the battery 31 in order to recharge it. This is of course so-called regenerative braking and will result in the braking effort which must be exerted by the bicycle braking system being reduced or largely eliminated and will also result in the frequency with which the battery 31 must be recharged by conventional means, that is to say with the aid of a battery charger, being reduced.

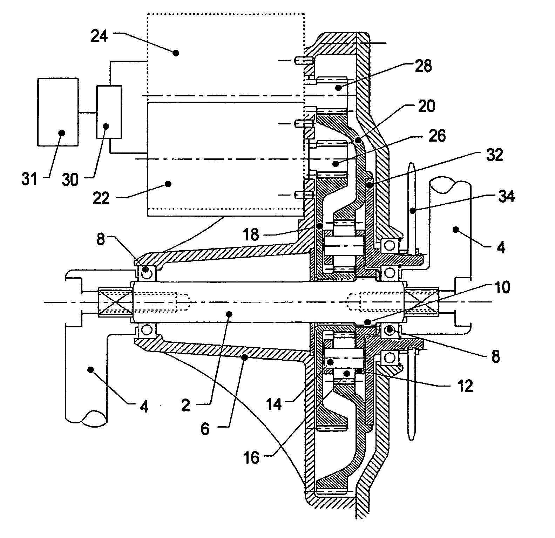

## Claims

1. A bicycle transmission system including an input (2) constituted by a bicycle crankshaft, which is connected, in use, to the pedals (4) of a bicycle, and an output (32), which is connected, in use, to a bicycle sprocket wheel (34), the input (2) and output (32) being connected to respective shafts of a three branch epicyclic gearset including a sun gear (18) which is in mesh with a plurality of planet gears (16), which are rotatably carried by a common planet carrier (12) and are in mesh with an annulus gear (20), and first and second electric motor/generators (22, 24), the rotors of which are connected to respective shafts of the gearset and the electrical connections of the stators of which are connected together via a controller (30) arranged to selectively control the electrical power transmitted to or from an electrical energy store (31) to the motor/generators (22, 24) or between them, the Rₒ ratio of the gearset, that is to say the ratio of the speed of the annulus gear (20) to the speed of the sun gear (18) when the planet carrier (12) is held stationary, being between -2 and -4, **characterised in that** the input (2) is connected to the planet carrier (12) and the sun gear (18) is rotatable with respect to the input (2) and is connected to the first motor/generator (22) via step-up gearing with a step-up ratio of at least 5 and the annulus gear (20) is connected to the second motor/generator (24) via step-up gearing with a step-up ratio of at least 8.

2. A transmission system as claimed in Claim 1 wherein splines are integrally formed on the bicycle crankshaft, which splines are in mesh with splines on the planet carrier (12).

3. A transmission system as claimed in Claim 1 or 2 wherein connected to the rotor of the first and second motor/generator (22, 24) is a respective pinion gear (26, 28) in mesh with gear teeth on the sun gear (18) and annulus gear (20), respectively.

4. A transmission system as claimed in any one of the preceding claims wherein the controller (30) is programmed selectively to direct electrical power from an electric battery (31) to at least one of the motor/generators (22, 24) to cause it to operate as a motor.

5. A transmission system as claimed in any one of the preceding claims wherein the controller (30) is programmed selectively to direct electrical power from that motor/generator (22 or 24) which is operating as a generator to an electric battery (31) to recharge it.

6. A bicycle including a transmission system as claimed in any one of Claims 1 to 5, the crankshaft of the bicycle being connected to the pedals of the bicycle to be rotated thereby, the output (32) of the transmission system being connected to a bicycle sprocket wheel (34) and the controller (30) being connected to an electrical energy store (31).

## Patentansprüche

1. Fahrradgetriebesystem mit einem durch eine Fahrrad-Kurbelwelle gebildeten Eingang (2), der im Gebrauch mit den Pedalen (4) eines Fahrrads verbunden ist, und einem Ausgang (32), der im Gebrauch mit einem Fahrrad-Zahnkettenrad (34) verbunden ist, wobei der Eingang (2) und der Ausgang (32) mit entsprechenden Wellen eines Dreiwellen-Planetengetriebes verbunden sind, das ein Sonnenrad (18) aufweist, welches mit einer Mehrzahl von Planetenrädern (16) in Eingriff ist, die drehbar von einem gemeinsamen Planetenträger (12) getragen werden und mit einem Zahnring (20) in Eingriff sind, und mit ersten und zweiten Elektromotoren/Generatoren (22, 24), deren Rotoren mit entsprechenden Wellen des Getriebes verbunden sind, und wobei die elektrischen Anschlüsse von deren Statoren über einen Regler (30) miteinander verbunden sind, der angeordnet ist, um die an einen oder von einem elektrischen Energiespeicher (31) an die Motoren/Generatoren (22, 24) oder zwischen ihnen übertragene elektrische Leistung selektiv zu regeln, wobei das R₀-Verhältnis des Getriebes, d.h. das Verhältnis der Geschwindigkeit des Zahnrings (20) zur Geschwindigkeit des Sonnenrads (18), wenn der Planetenträger (12) stationär gehalten wird, zwischen -2 und -4 beträgt, **dadurch gekennzeichnet, dass** der Eingang (2) mit dem Planetenträger (12) verbunden ist und das Sonnenrad (18) bezüglich des Eingangs (2) drehbar ist und über ein Übersetzungsgetriebe mit einem Übersetzungsverhältnis von wenigstens 5 mit dem ersten Motor/Generator (22) verbunden ist, und der Zahnring (20) über ein Übersetzungsgetriebe mit einem Übersetzungsverhältnis von wenigstens 8 mit dem zweiten Motor/Generator (24) verbunden ist.

2. Getriebesystem nach Anspruch 1, wobei Kerbverzahnungen einstückig an der Fahrrad-Kurbelwelle ausgebildet sind, die mit Kerbverzahnungen an dem Planetenträger (12) in Eingriff stehen.

3. Getriebesystem nach Anspruch 1 oder 2, wobei ein entsprechendes Ritzel (26, 28), das mit Zähnen an dem Sonnenrad (18) bzw. dem Zahnring (20) in Eingriff ist, mit dem Rotor des ersten und zweiten Motors/Generators (22, 24) verbunden ist.

4. Getriebesystem nach einem der vorhergehenden Ansprüche, wobei der Regler (30) programmiert ist, um selektiv elektrische Leistung von einer elektrischen Batterie (31) an wenigstens einen der Motoren/Generatoren (22, 24) zu leiten, um zu veranlassen, dass er als Motor arbeitet.

5. Getriebesystem nach einem der vorhergehenden Ansprüche, wobei der Regler (30) programmiert ist, um selektiv elektrische Leistung von demjenigen Motor/Generator (22 oder 24), der als Generator arbeitet, an eine elektrische Batterie (31) zu leiten, um sie wieder aufzuladen.

6. Fahrrad mit einem Getriebesystem nach einem der Ansprüche 1 bis 5, wobei die Kurbelwelle des Fahrrads mit den Pedalen des Fahrrads verbunden ist, um **dadurch** gedreht zu werden, wobei der Ausgang (32) des Getriebesystems mit einem Fahrrad-Zahnkettenrad (32) verbunden ist, und wobei der Regler (30) mit einem elektrischen Energiespeicher (31) verbunden ist.

## Revendications

1. Système de transmission de bicyclette comprenant une entrée (2) constituée par un vilebrequin de bicyclette, qui est connecté, en utilisation, aux pédales (4) d'une bicyclette, et une sortie (32), qui est connectée, en utilisation, à une roue dentée de bicyclette (34), l'entrée (2) et la sortie (32) étant connectées à des arbres respectifs d'un train épicycloïdal à trois branches comprenant un engrenage solaire (18) qui est engrené avec une pluralité d'engrenages planétaires (16), qui sont portés de manière à pouvoir tourner par un porteur planétaire commun (12) et qui sont engrenés avec une couronne (20), et des premier et deuxième moteur électrique/générateurs (22, 24) dont les rotors sont connectés à des arbres respectifs du train et dont les stators ont des connexions électriques qui sont connectées ensemble par le biais d'un organe de commande (30) agencé pour commander sélectivement l'alimentation électrique transmise à destination ou en provenance d'un stockage d'énergie électrique (31) des moteur/générateurs (22, 24) ou entre eux, le rapport Rₒ du train, c'est-à-dire le rapport du régime de la couronne (20) sur le régime de l'engrenage solaire (18) lorsque le porteur planétaire (12) est maintenu immobile, étant entre -2 et -4, **caractérisé en ce que** l'entrée (2) est connectée au porteur planétaire (12) et l'engrenage solaire (18) peut tourner par rapport à l'entrée (2) et est connecté au premier moteur/générateur (22) par le biais d'un jeu d'engrenages multiplicateur avec un rapport multiplicateur d'au moins 5 et la couronne (20) est connectée au deuxième moteur/générateur (24) par le biais d'un jeu d'engrenages multiplicateur avec un rapport multiplicateur d'au moins 8.

2. Système de transmission selon la revendication 1, dans lequel des cannelures sont formées de manière intégrale sur le vilebrequin de bicyclette, lesquelles cannelures sont engrenées avec des cannelures sur le porteur planétaire (12).

3. Système de transmission selon la revendication 1 ou 2, dans lequel un pignon (26, 28) respectif engrené avec des dents d'engrenage respectivement sur l'engrenage solaire (18) et la couronne (20) est connecté au rotor des premier et deuxième moteur/générateurs (22, 24).

4. Système de transmission selon l'une quelconque des revendications précédentes, dans lequel l'organe de commande (30) est programmé sélectivement pour diriger l'alimentation électrique d'une batterie électrique (31) vers au moins l'un des moteur/générateurs (22, 24) pour l'amener à fonctionner en tant que moteur.

5. Système de transmission selon l'une quelconque des revendications précédentes, dans lequel l'organe de commande (30) est programmé sélectivement pour diriger l'alimentation électrique de ce moteur/générateur (22 ou 24) qui fonctionne en tant que générateur vers une batterie électrique (31) pour la recharger.

6. Système de transmission selon l'une quelconque des revendications 1 à 5, le vilebrequin de la bicyclette étant connecté aux pédales de la bicyclette qui le font tourner, la sortie (32) du système de transmission étant connectée à une roue dentée de bicyclette (34) et l'organe de commande (30) étant connecté à un stockage d'énergie électrique (31).
